# EUROPEAN PATENT APPLICATION

(11) **EP 4 145 793 A1**
(43) Date of publication of application: **08.03.2023**
(21) Application number: 21204301.2
(22) Date of filing: 22.10.2021
(51) Int. Cl.: H04L 41/082, H04L 41/0869, H04L 41/0866

(54) **TIME-BASED SYNCHRONIZED ACTIVATION OF CONFIGURATION UPDATES IN NETWORK DEVICES**

(30) Priority: 01.09.2021 US 202117446662
(71) Applicant: Juniper Networks, Inc., Sunnyvale, CA 94089 (US)
(72) Inventor: ANAND, Amish, Sunnyvale, 94089 (US); SHANTANU, Kaustubh, Sunnyvale, 94089 (US); SIMARIA, Nilesh, Sunnyvale, 94089 (US); KRISHNAMURTHY, Pallavi Ganny, Sunnyvale, 94089 (US); SUBBAIAH, Polisetty Rama, Sunnyvale, 94089 (US)
(74) Representative: D Young & Co LLP

(57) **Abstract**

A network device may receive configuration information with a first command and a second command and may generate a data structure based on the first command. The network device may store files of the configuration information in the data structure based on the first command and may activate the files stored in the data structure, to configure the network device, based on a timestamp or a time period specified in the second command.

## Description

### BACKGROUND

A network management system may provide an application (e.g., a configuration application) to a network device in order to update a configuration of the network device. The network device may save the configuration application using a model (e.g., a configuration commit model) that modifies the configuration application, if necessary, and commits the configuration application to the network device.

### SUMMARY

Particular aspects are set out in the appended independent claims. Various optional embodiments are set out in the dependent claims.

Some implementations described herein relate to a method. The method may include receiving configuration information with a first command and a second command and generating a data structure based on the first command. The method may include storing files of the configuration information in the data structure based on the first command and activating the files stored in the data structure, to configure a network device, based on a timestamp or a time period specified in the second command.

Some implementations described herein relate to a network device. The network device may include one or more memories and one or more processors. The one or more processors may be configured to receive configuration information with a first command and a second command and generate a data structure based on the first command. The one or more processors may be configured to store files for the configuration update in the data structure based on the first command and activate the files stored in the data structure based on a timestamp or a time period specified in the second command. The one or more processors may be configured to perform one or more actions, based on the second command, after activating the files stored in the data structure.

Some implementations described herein relate to a computer-readable medium that carries a set of instructions for a network device. The set of instructions, when executed by one or more processors of the network device, may cause the network device to receive an application with a first command and a second command and determine whether one or more errors are present in the application. The set of instructions, when executed by one or more processors of the network device, may cause the network device to provide, to a network administrator associated with the network device, a message identifying the one or more errors when the one or more errors are present in the application. The set of instructions, when executed by one or more processors of the network device, may cause the network device to store files of the application in a data structure based on the first command and when the one or more errors are not present in the application. The set of instructions, when executed by one or more processors of the network device, may cause the network device to activate the files stored in the data structure based on a timestamp or a time period specified in the second command.

### BRIEF DESCRIPTION OF THE DRAWINGS

Figs. 1A-1F are diagrams of an example associated with providing time-based synchronized activation of configuration updates in network devices.
Fig. 2 is a diagram of an example environment in which systems and/or methods described herein may be implemented.
Figs. 3 and 4 are diagrams of example components of one or more devices of Fig. 2.
Fig. 5 is a flowchart of an example process associated with providing time-based synchronized activation of configuration updates in network devices.

### DETAILED DESCRIPTION

The following detailed description of example implementations refers to the accompanying drawings. The same reference numbers in different drawings may identify the same or similar elements.

Installing an application (e.g., a configuration application) on a network device includes a two-step process. In a first step, known as a preparation step, the configuration installation is validated and a new data structure (e.g., a database that could become an executing database in the future) and configuration files are generated and stored in the data structure. In a second step, known as an activation step, the previously generated configuration files are activated and become a current, operational device configuration. This enables the configuration to be installed on several network devices, and the configuration can be activated simultaneously on the network devices at a later point in time. The purpose of decoupling the steps is to provide a definitive time window for the configuration to be effective on all network devices. Thus, activating the configuration requires providing an activate command, at a later time, to all network devices that received the configuration. However, the activate command may not be received by one or more of the network devices and the configuration may not be activated on such network devices.

Thus, current techniques for providing and activating an application for network devices consume computing resources (e.g., processing resources, memory resources, communication resources, and/or the like), networking resources, and/or the like that are associated with unnecessarily increasing network traffic with separate activation commands, failing to send activation commands, the network devices not receiving the activation commands due to packet loss issues in a network, discovering that an activation command was not received, resending the activation command that was not received and re-confirming that the activation command was properly received, and/or the like.

Some implementations described herein relate to a network device that provides time-based synchronized activation of configuration updates. For example, the network device may receive configuration information with a first command (e.g., a prepare command) and a second command (e.g., an activate command) and may generate a data structure based on the first command. The network device may store files of the configuration information in the data structure based on the first command and may activate the files stored in the data structure, to configure the network device, based on a timestamp or a time period specified in the second command.

In this way, the network device provides time-based synchronized activation of configuration updates. The network device may utilize a timestamp or a time period provided with an application to determine when to activate the application. This may simplify installation of the application so that an activate command need not be provided at a later point in time. Utilization of the timestamp or the time period may reduce network traffic, and may cause activation of the application even when the network device fails to receive an activate command from a network management system or due to packet loss issues in the network. Since the intelligence is within the network device, the activation does not depend on network conditions. Thus, the network device conserves computing resources, networking resources, and/or the like that would otherwise have been consumed by unnecessarily increasing network traffic with separate activation commands, failing to send activation commands, the network devices not receiving the activation commands due to packet loss issues in a network, discovering that an activation command was not received, resending the activation command that was not received and re-confirming that the activation command was properly received, and/or the like.

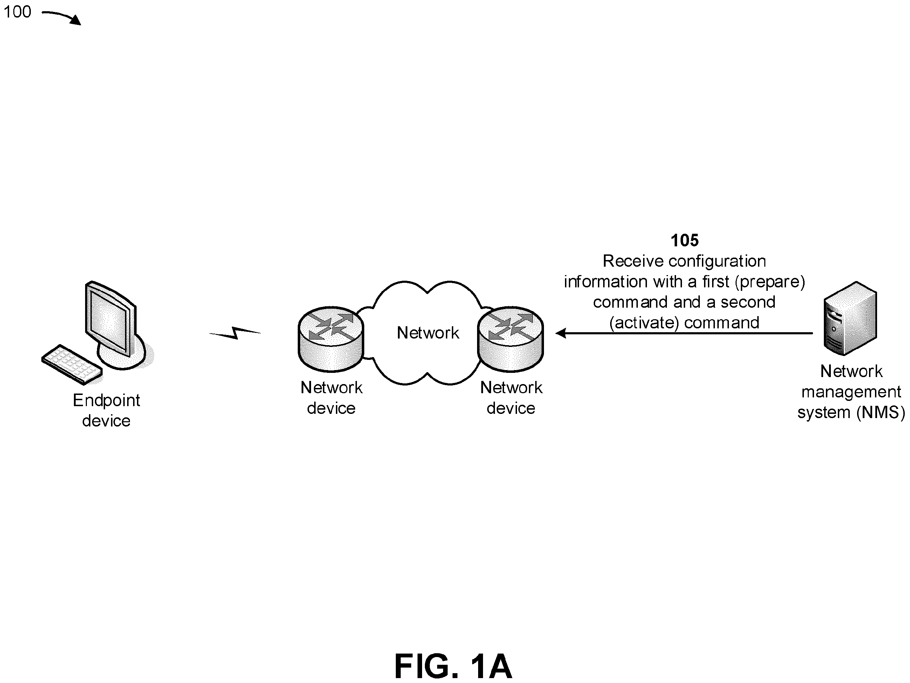

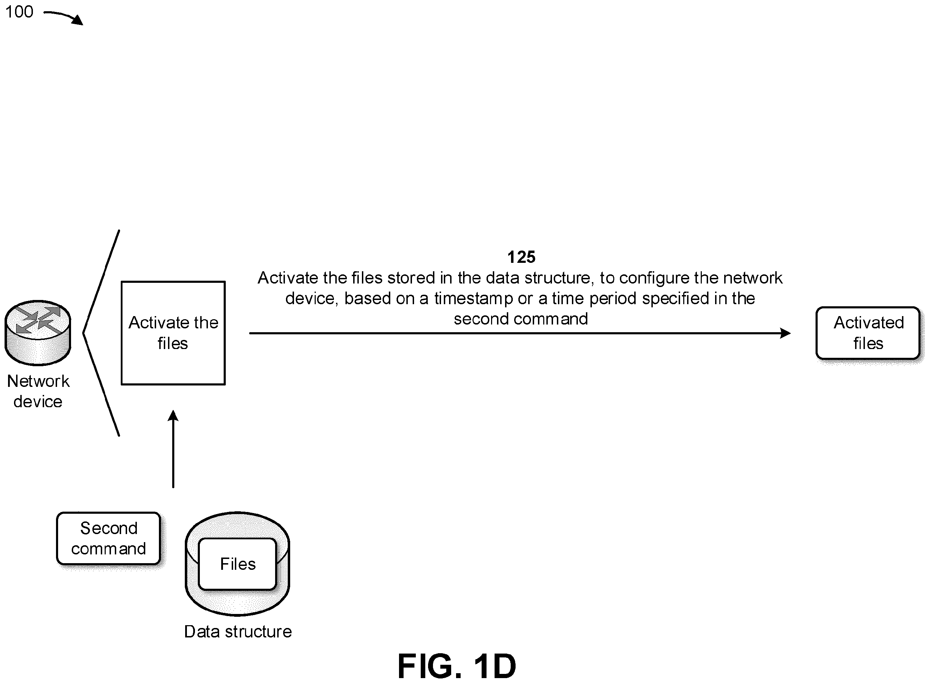

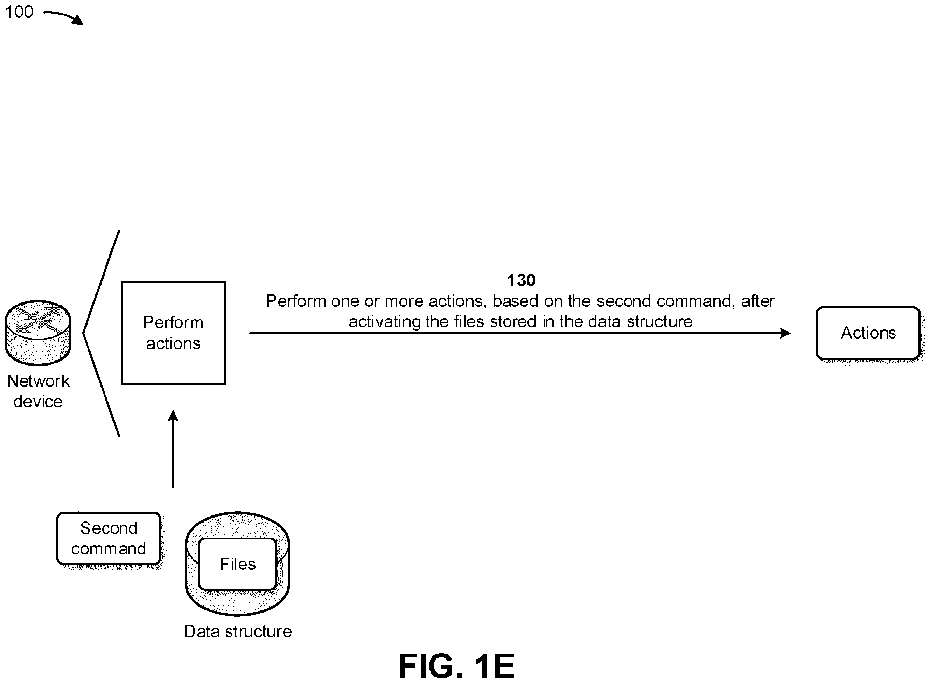

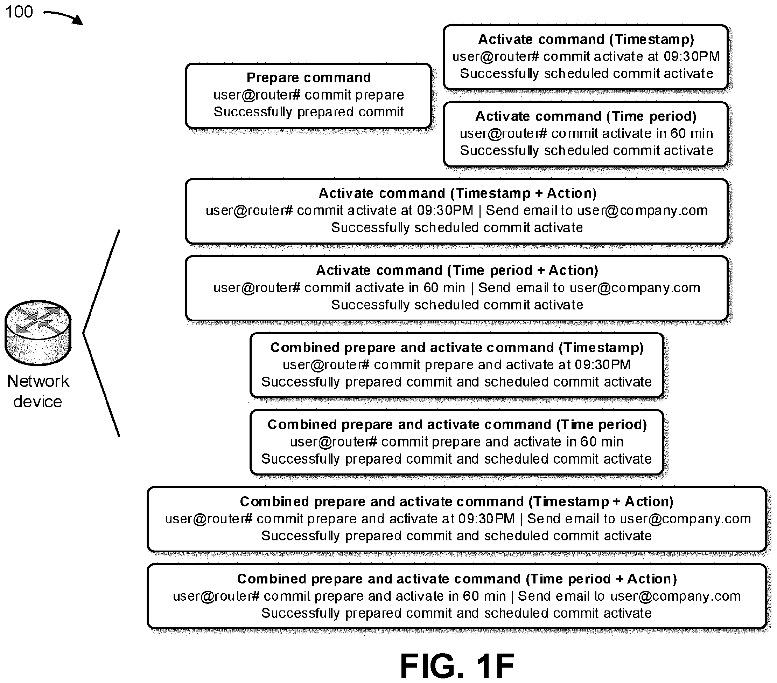

Figs. 1A-1F are diagrams of an example 100 associated with providing time-based synchronized activation of configuration updates in network devices. As shown in Figs. 1A-1F, example 100 includes an endpoint device, a network of network devices, and a network management system (NMS). Further details of the endpoint device, the network, the network devices, and the network management system are provided elsewhere herein.

As shown in Fig. 1A, and by reference number 105, the network device may receive, from the network management system, configuration information with a first command and a second command. For example, the network device may receive a configuration application from the network management system. The configuration application may include an application that updates a configuration of the network device.

The first command may include a prepare command with instructions to perform a preparation step. The instructions to perform the preparation step may include instructions to validate the configuration installation, instructions to generate a new data structure (e.g., a database that could become an executing database in the future), and instructions to generate configuration files and store the configuration files in the data structure. In one example, the first command may include the syntax to perform the preparation step (e.g., *user@router#commit prepare).*

The second command may include an activate command with instructions to perform an activation step. The instructions to perform the activation step may include instructions to activate the previously generated configuration files (e.g., stored in the data structure) so that the configuration files become a current, operational device configuration for the network device. In some implementations, the second command may include syntax identifying a time (e.g., *user@router# commit activate at 09:30 PM)* to activate the configuration files, syntax identifying a time period (e.g., *user@router#commit activate in 60 min*) to activate the configuration files, syntax identifying one or more actions to perform (e.g., *user@router# commit activate* I *send-mail to user@company.com)* when activating or after activating the configuration files, syntax identifying a time and one or more actions to perform (e.g., *user@router# commit activate at 09:30 PM* I *send-mail to user@company.com)* when activating the configuration files, syntax identifying a time period and one or more actions to perform (e.g., *user@router#commit activate in 60 min* I *send-mail to user@company.com)* when activating the configuration files, and/or the like.

In some implementations, the first command and the second command may be combined to form a combined command. The combined command may include a prepare command with instructions to perform a preparation step and an activate command with instructions to perform an activation step. The instructions to perform the preparation step and the activation step may include instructions to validate the configuration installation, instructions to generate the new data structure, instructions to generate configuration files and store the configuration files in the data structure, and instructions to activate the previously generated configuration files (e.g., stored in the data structure) so that the configuration files become a current, operational device configuration for the network device. In some implementations, the combined command may include syntax to perform the preparation step and to identify a time (e.g., *user@router# commit prepare and activate at 09:30 PM)* to activate the configuration files, syntax to perform the preparation step and to identify a time period (e.g., *user@router#commit prepare and activate in 60 min*) to activate the configuration files, syntax to perform the preparation step and to identify one or more actions to perform (e.g., *user@router# commit prepare and activate* I *send-mail to user@company.com)* when activating or after activating the configuration files, syntax to perform the preparation step and to identify a time and one or more actions to perform (e.g., *user@router# commit prepare and activate at 09:30 PM* I *send-mail to user@company.com)* when activating the configuration files, syntax to perform the preparation step and to identify a time period and one or more actions to perform (e.g., *user@router#commit prepare and activate in 60 min* I *send-mail to user@company.com*) when activating the configuration files, and/or the like.

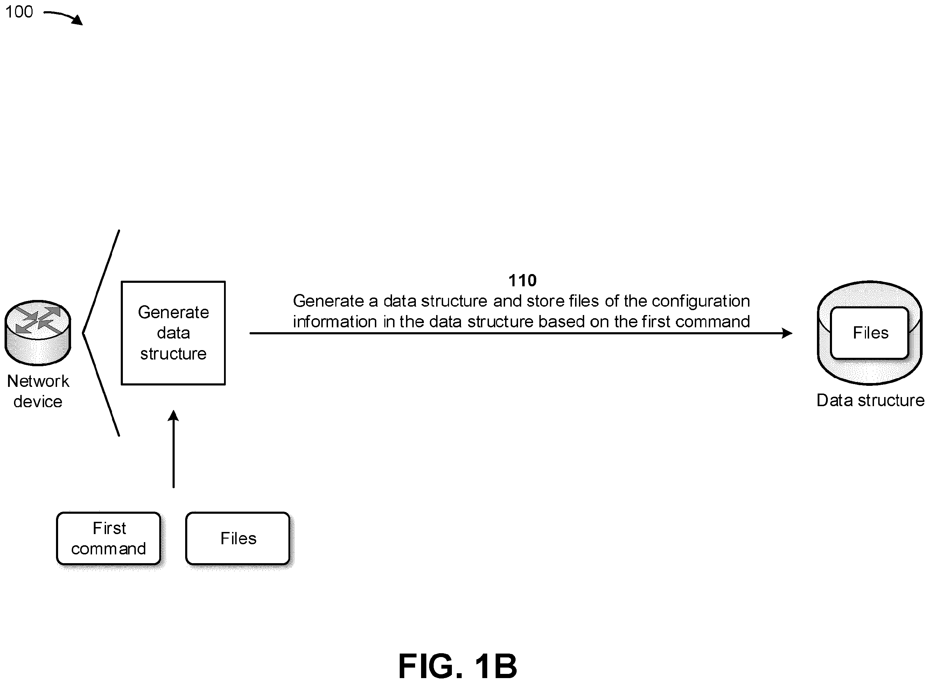

As shown in Fig. 1B, and by reference number 110, the network device may generate a data structure (e.g., a database, a tree, a list, and/or the like) and may store files of the configuration information in the data structure based on the first command. For example, the network device may execute the instructions of the first command to perform the preparation step. Execution of the instructions to perform the preparation step may cause the network device to execute the instructions to generate the data structure, which may cause the network device to generate the data structure. Execution of the instructions to perform the preparation step may also cause the network device to execute the instructions to generate configuration files and store the configuration files in the data structure, which may cause the network device to store the files of the configuration information in the data structure.

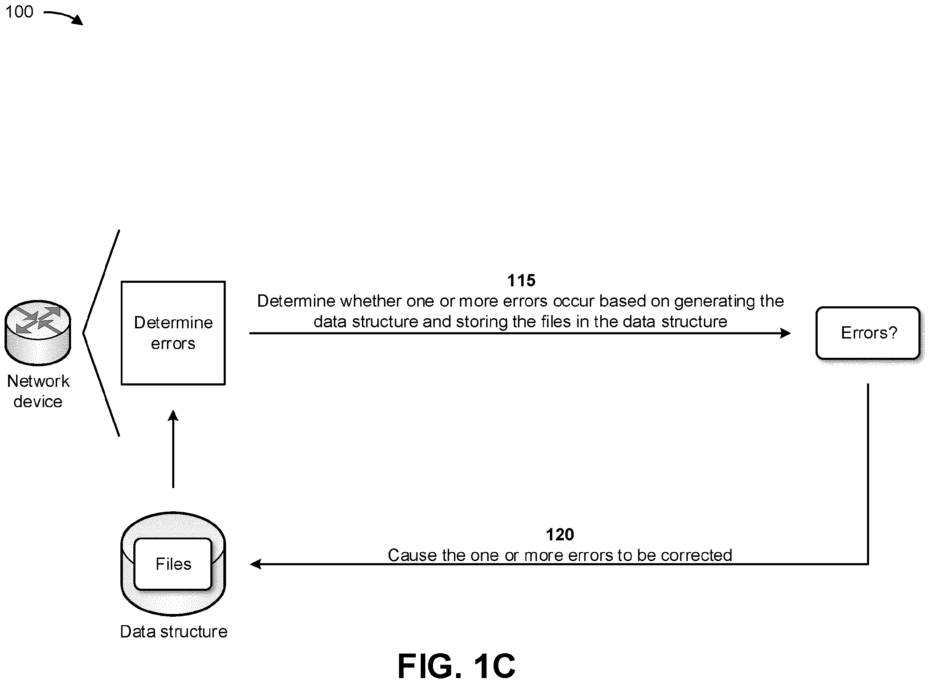

As shown in Fig. 1C, and by reference number 115, the network device may determine whether one or more errors occur based on generating the data structure and storing the files of the configuration information in the data structure. For example, execution of the instructions to perform the preparation step may cause the network device to execute the instructions to validate the configuration installation, which may cause the network device to determine whether one or more errors occur based on generating the data structure and storing the files of the configuration information in the data structure.

Alternatively, the network device may determine whether one or more errors are present in the configuration information, and may refrain from generating the data structure and storing the files of the configuration information in the data structure when one or more errors are present in the configuration information. In such implementations, the network device may also provide, to a network administrator associated with the network device, a message identifying the one or more errors when the one or more errors are present in the configuration information.

As further shown in Fig. 1C, and by reference number 120, the network device may cause the one or more errors to be corrected. For example, the network device may determine that the one or more errors are present in one or more of the files of the configuration information. The network device may correct the one or more errors present in the one or more files of the configuration information to generate corrected files of the configuration information. The network device may store the corrected files of the configuration information in the data structure along with files of the configuration information without the one or more errors.

As shown in Fig. ID, and by reference number 125, the network device may activate the files stored in the data structure, to configure the network device, based on a timestamp or a time period specified in the second command. For example, the network device may execute the instructions of the second command to perform the activation step. Execution of the instructions to perform the activation step may cause the network device to execute the instructions to activate the previously generated files (e.g., stored in the data structure) so that the files become a current, operational device configuration for the network device based on the timestamp or the time period, which may cause the network device to activate the files stored in the data structure and to configure the network device, at the time specified by the timestamp or after the time period expires.

As shown in Fig. IE, and by reference number 130, the network device may perform one or more actions, based on the second command, after activating the files stored in the data structure. For example, the network device may execute the instructions of the second command to perform the activation step. Execution of the instructions to perform the activation step may cause the network device to execute the instructions to perform the one or more actions after activating the files stored in the data structure.

In some implementations, the one or more actions include the network device providing, to a network administrator associated with the network device, an email indicating that the files are activated, a text message indicating that the files are activated, a voice message indicating that the files are activated, and/or the like. For example, the network device may provide the email, the text message, and/or the voice message, indicating that the files are activated, to a device (e.g., a smartphone, a tablet, and/or the like) associated with the network administrator. Although implementations described herein relate to providing the configuration information to a single network device, in some implementations the configuration information may be provided to a plurality of network devices so that the plurality of network devices may be configured at the same time (e.g., as specified in the timestamp or the time period of the second command). In this way, the network device or the plurality of network devices may notify the network administrator that the configuration of the network device or the plurality of network devices is complete and successful. This may conserve computing resources, networking resources, and/or the like that would otherwise have been consumed by unnecessarily increasing network traffic with a separate activation command, failing to send an activation command, the network device not receiving the activation command due to packet loss issues in a network, and/or the like.

In some implementations, the one or more actions include the network device rebooting the network device to enable a configuration update. For example, after activating the files stored in the data structure, the network device may reboot to enable a configuration update of the network device based on the configuration information. In this way, the network device may conserve computing resources, networking resources, and/or the like that would otherwise have been consumed by unnecessarily increasing network traffic with a separate activation command, failing to send an activation command, the network device not receiving the activation command due to packet loss issues in a network, discovering that an activation command was not received, and/or the like.

In some implementations, the one or more actions include the network device informing the network management system that the configuration update succeeded or failed. For example, after activating the files stored in the data structure, the network device may update a configuration of the network device based on the activated files. The network device may determine whether the configuration update succeeded or failed and may provide a message, to the network management system, indicating whether the configuration update succeeded or failed. If the configuration update failed, the network management system may modify the configuration information (e.g., to correct any errors) and may provide the modified configuration information to the network device for installation. In this way, the network device may conserve computing resources, networking resources, and/or the like that would otherwise have been consumed by unnecessarily increasing network traffic with a separate activation command, discovering that an activation command was not received, resending the activation command that was not received and re-confirming that the activation command was properly received, and/or the like.

In some implementations, the one or more actions include the network device informing another network device that the network device has performed the configuration update or will go offline to reboot. For example, after activating the files stored in the data structure, the network device may update a configuration of the network device based on the activated files and may need to reboot for the updated configuration to be implemented. The network device may provide a message, to another network device, indicating that the network device updated the configuration or will go offline to reboot for the updated configuration to be implemented. In this way, the network device may conserve computing resources, networking resources, and/or the like that would otherwise have been consumed by losing network traffic generated by the other network device and destined for the offline network device, unnecessarily increasing network traffic with a separate activation command, discovering that an activation command was not received, and/or the like.

Fig. IF is a diagram depicting alternative forms of the first command (e.g., a prepare command) and the second command (e.g., an activate command). As shown, the prepare command may be a separate command and may include the syntax *user@router# commit prepare* and *successfully prepared commit.* The activate command may be a separate command with a timestamp and may include the syntax *user@router# commit activate at 09:30PM* and *successfully scheduled commit activate.* The activate command may be a separate command with a time period and may include the syntax *user@router# commit activate in 60 min* and *successfully scheduled commit activate.* The activate command may be a separate command with a timestamp and an action to perform and may include the syntax *user@router# commit activate at 09:30PM* I *Send email to user@company.com* and *successfully scheduled commit activate.* The activate command may be a separate command with a time period and an action to perform and may include the syntax *user@router# commit activate in 60 min* I *Send email to user@company.com* and *successfully scheduled commit activate.*

As further shown, the prepare command and the activate command may be a combined command with a timestamp and may include the syntax *user@router# commit prepare and activate at 09:30PM* and *successfully prepared commit and scheduled commit activate.* The prepare command and the activate command may be a combined command with a time period and may include the syntax *user@router# commit prepare and activate in 60 min* and *successfully prepared commit and scheduled commit activate.* The prepare command and the activate command may be a combined command with a timestamp and an action to perform and may include the syntax *user@router# commit prepare and activate at 09:30PM* I *Send email to user@company. com* and *successfully prepared commit and scheduled commit activate.* The prepare command and the activate command may be a combined command with a time period and an action to perform and may include the syntax *user@router# commit prepare and activate in 60 min* I *Send email to user@company.com* and *successfully prepared commit and scheduled commit activate.*

In this way, the network device provides time-based synchronized activation of configuration updates. The network device may utilize a timestamp or a time period provided with an application to determine when to activate the application. This may simplify installation of the application so that an activate command need not be provided at a later point in time. Utilization of the timestamp or the time period may reduce network traffic, and may cause activation of the application even when the network device fails to receive an activate command from a network management system or due to packet loss issues in the network. Since the intelligence is within the network device, the activation does not depend on network conditions. Thus, the network device conserves computing resources, networking resources, and/or the like that would otherwise have been consumed by unnecessarily increasing network traffic with separate activation commands, failing to send activation commands, the network devices not receiving the activation commands due to packet loss issues in a network, discovering that an activation command was not received, resending the activation command that was not received and re-confirming that the activation command was properly received, and/or the like.

As indicated above, Figs. 1A-1F are provided as an example. Other examples may differ from what is described with regard to Figs. 1A-1F. The number and arrangement of devices shown in Figs. 1A-1F are provided as an example. In practice, there may be additional devices, fewer devices, different devices, or differently arranged devices than those shown in Figs. 1A-1F. Furthermore, two or more devices shown in Figs. 1A-1F may be implemented within a single device, or a single device shown in Figs. 1A-1F may be implemented as multiple, distributed devices. Additionally, or alternatively, a set of devices (e.g., one or more devices) shown in Figs. 1A-1F may perform one or more functions described as being performed by another set of devices shown in Figs. 1A-1F.

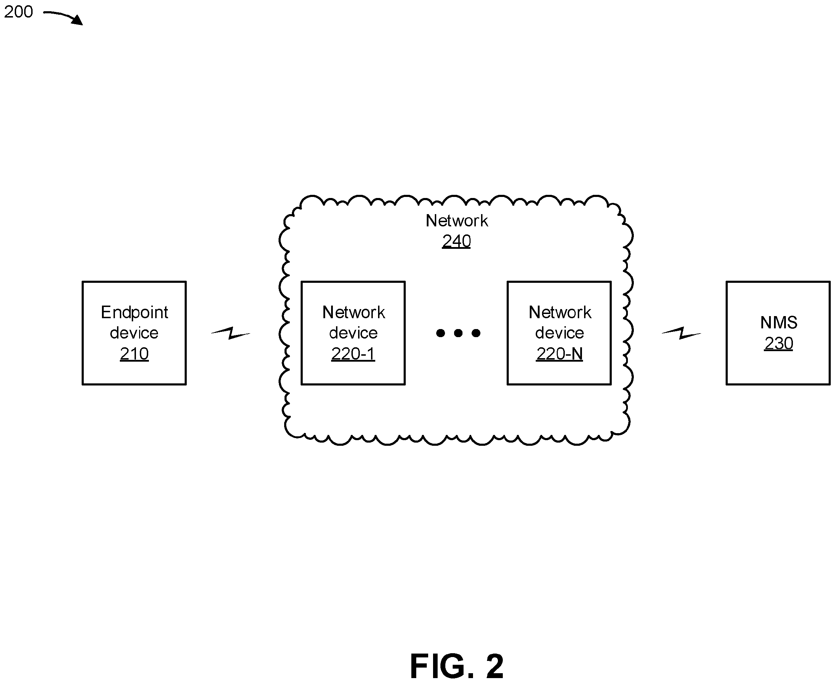

Fig. 2 is a diagram of an example environment 200 in which systems and/or methods described herein may be implemented. As shown in Fig. 2, environment 200 may include an endpoint device 210, a group of network devices 220 (shown as network device 220-1 through network device 220-N), a network management system 230, and a network 240. Devices of the environment 200 may interconnect via wired connections, wireless connections, or a combination of wired and wireless connections.

The endpoint device 210 includes one or more devices capable of receiving, generating, storing, processing, and/or providing information, such as information described herein. For example, the endpoint device 210 may include a mobile phone (e.g., a smart phone or a radiotelephone), a laptop computer, a tablet computer, a desktop computer, a handheld computer, a gaming device, a wearable communication device (e.g., a smart watch, a pair of smart glasses, a heart rate monitor, a fitness tracker, smart clothing, smart jewelry, or a head mounted display), a network device, or a similar type of device. In some implementations, the endpoint device 210 may receive network traffic from and/or may provide network traffic to other endpoint devices 210 and/or the network management system 230, via the network 240 (e.g., by routing packets using the network devices 220 as intermediaries).

The network device 220 includes one or more devices capable of receiving, processing, storing, routing, and/or providing traffic (e.g., a packet or other information or metadata) in a manner described herein. For example, the network device 220 may include a router, such as a label switching router (LSR), a label edge router (LER), an ingress router, an egress router, a provider router (e.g., a provider edge router or a provider core router), a virtual router, or another type of router. Additionally, or alternatively, the network device 220 may include a gateway, a switch, a firewall, a hub, a bridge, a reverse proxy, a server (e.g., a proxy server, a cloud server, or a data center server), a load balancer, and/or a similar device. In some implementations, the network device 220 may be a physical device implemented within a housing, such as a chassis. In some implementations, the network device 220 may be a virtual device implemented by one or more computer devices of a cloud computing environment or a data center. In some implementations, a group of network devices 220 may be a group of data center nodes that are used to route traffic flow through the network 240.

The network management system 230 includes one or more devices capable of receiving, generating, storing, processing, and/or providing information, such as information described herein. For example, the network management system 230 may include a laptop computer, a tablet computer, a desktop computer, a group of server devices, or a similar type of device, associated with multicast traffic. In some implementations, the network management system 230 may receive information from and/or transmit information (e.g., multicast traffic) to the endpoint device 210, via the network 240 (e.g., by routing packets using the network devices 220 as intermediaries).

The network 240 includes one or more wired and/or wireless networks. For example, the network 240 may include a packet switched network, a cellular network (e.g., a fifth generation (5G) network, a fourth generation (4G) network, such as a long-term evolution (LTE) network, a third generation (3G) network, a code division multiple access (CDMA) network, a public land mobile network (PLMN), a local area network (LAN), a wide area network (WAN), a metropolitan area network (MAN), a telephone network (e.g., the Public Switched Telephone Network (PSTN)), a private network, an ad hoc network, an intranet, the Internet, a fiber opticbased network, a cloud computing network, or the like, and/or a combination of these or other types of networks.

The number and arrangement of devices and networks shown in Fig. 2 are provided as an example. In practice, there may be additional devices and/or networks, fewer devices and/or networks, different devices and/or networks, or differently arranged devices and/or networks than those shown in Fig. 2. Furthermore, two or more devices shown in Fig. 2 may be implemented within a single device, or a single device shown in Fig. 2 may be implemented as multiple, distributed devices. Additionally, or alternatively, a set of devices (e.g., one or more devices) of the environment 200 may perform one or more functions described as being performed by another set of devices of the environment 200.

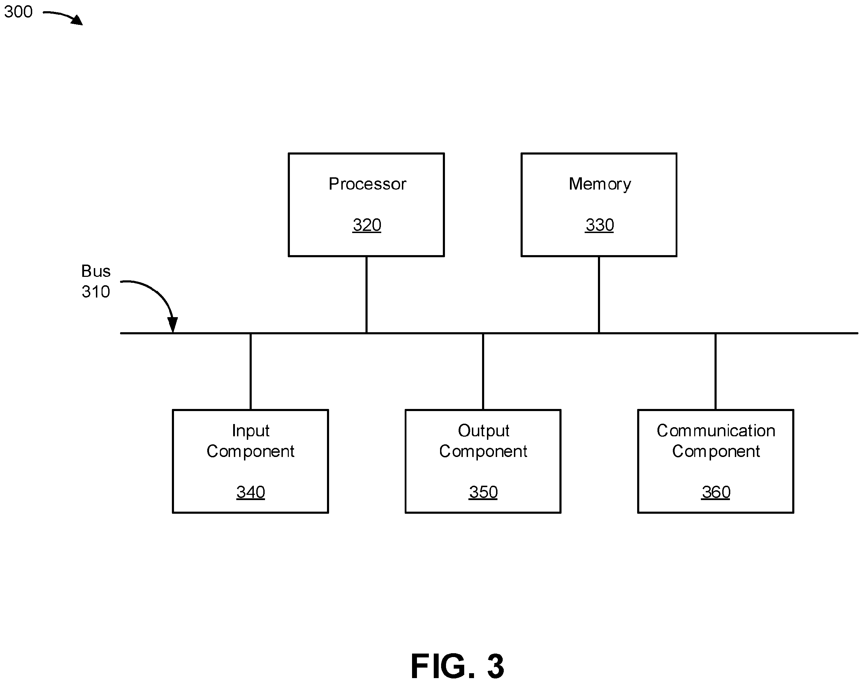

Fig. 3 is a diagram of example components of one or more devices of Fig. 2. The example components may be included in a device 300, which may correspond to the endpoint device 210, the network device 220, and/or the network management system 230. In some implementations, the endpoint device 210, the network device 220, and/or the network management system 230 may include one or more devices 300 and/or one or more components of the device 300. As shown in Fig. 3, device 300 may include a bus 310, a processor 320, a memory 330, an input component 340, an output component 350, and a communication component 360.

The bus 310 includes one or more components that enable wired and/or wireless communication among the components of the device 300. The bus 310 may couple together two or more components of Fig. 3, such as via operative coupling, communicative coupling, electronic coupling, and/or electric coupling. The processor 320 includes a central processing unit, a graphics processing unit, a microprocessor, a controller, a microcontroller, a digital signal processor, a field-programmable gate array, an application-specific integrated circuit, and/or another type of processing component. The processor 320 is implemented in hardware, firmware, or a combination of hardware and software. In some implementations, the processor 320 includes one or more processors capable of being programmed to perform one or more operations or processes described elsewhere herein.

The memory 330 includes volatile and/or nonvolatile memory. For example, the memory 330 may include random access memory (RAM), read only memory (ROM), a hard disk drive, and/or another type of memory (e.g., a flash memory, a magnetic memory, and/or an optical memory). The memory 330 may include internal memory (e.g., RAM, ROM, or a hard disk drive) and/or removable memory (e.g., removable via a universal serial bus connection). The memory 330 may be a non-transitory computer-readable medium. The memory 330 stores information, instructions, and/or software (e.g., one or more software applications) related to the operation of the device 300. In some implementations, the memory 330 includes one or more memories that are coupled to one or more processors (e.g., the processor 320), such as via the bus 310.

The input component 340 enables the device 300 to receive input, such as user input and/or sensed input. For example, the input component 340 may include a touch screen, a keyboard, a keypad, a mouse, a button, a microphone, a switch, a sensor, a global positioning system sensor, an accelerometer, a gyroscope, and/or an actuator. The output component 350 enables the device 300 to provide output, such as via a display, a speaker, and/or a light-emitting diode. The communication component 360 enables the device 300 to communicate with other devices via a wired connection and/or a wireless connection. For example, the communication component 360 may include a receiver, a transmitter, a transceiver, a modem, a network interface card, and/or an antenna.

The device 300 may perform one or more operations or processes described herein. For example, a computer-readable medium (e.g., the memory 330) may store a set of instructions (e.g., one or more instructions or code) for execution by the processor 320. The processor 320 may execute the set of instructions to perform one or more operations or processes described herein. In some implementations, execution of the set of instructions, by one or more processors 320, causes the one or more processors 320 and/or the device 300 to perform one or more operations or processes described herein. In some implementations, hardwired circuitry may be used instead of or in combination with the instructions to perform one or more operations or processes described herein. Additionally, or alternatively, the processor 320 may be configured to perform one or more operations or processes described herein. Thus, implementations described herein are not limited to any specific combination of hardware circuitry and software.

The number and arrangement of components shown in Fig. 3 are provided as an example. The device 300 may include additional components, fewer components, different components, or differently arranged components than those shown in Fig. 3. Additionally, or alternatively, a set of components (e.g., one or more components) of the device 300 may perform one or more functions described as being performed by another set of components of the device 300.

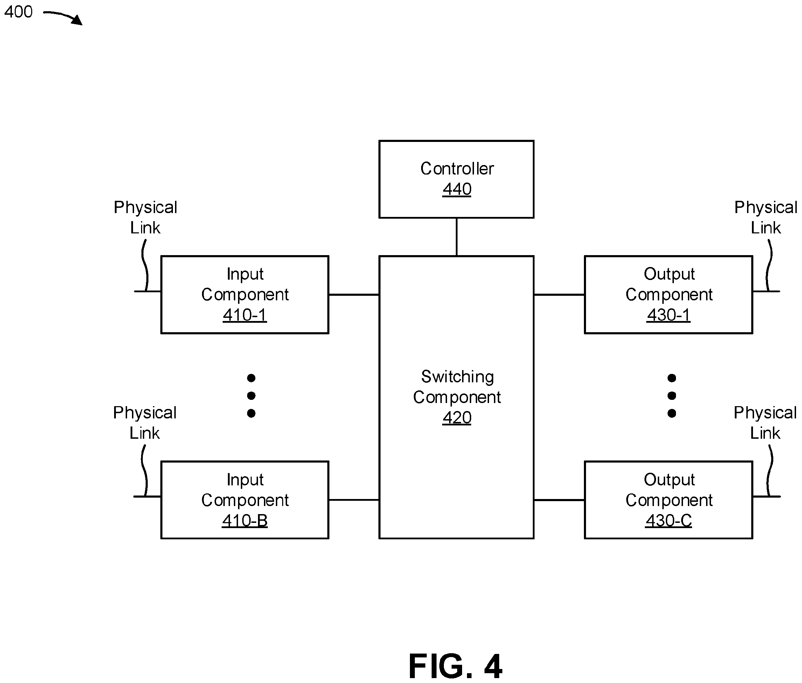

Fig. 4 is a diagram of example components of one or more devices of Fig. 2. The example components may be included in a device 400. The device 400 may correspond to the network device 230. In some implementations, the network device 230 may include one or more devices 400 and/or one or more components of the device 400. As shown in Fig. 4, the device 400 may include one or more input components 410-1 through 410-B (B ≥ 1) (hereinafter referred to collectively as input components 410, and individually as input component 410), a switching component 420, one or more output components 430-1 through 430-C (C ≥ 1) (hereinafter referred to collectively as output components 430, and individually as output component 430), and a controller 440.

The input component 410 may be one or more points of attachment for physical links and may be one or more points of entry for incoming traffic, such as packets. The input component 410 may process incoming traffic, such as by performing data link layer encapsulation or decapsulation. In some implementations, the input component 410 may transmit and/or receive packets. In some implementations, the input component 410 may include an input line card that includes one or more packet processing components (e.g., in the form of integrated circuits), such as one or more interface cards (IFCs), packet forwarding components, line card controller components, input ports, processors, memories, and/or input queues. In some implementations, the device 400 may include one or more input components 410.

The switching component 420 may interconnect the input components 410 with the output components 430. In some implementations, the switching component 420 may be implemented via one or more crossbars, via busses, and/or with shared memories. The shared memories may act as temporary buffers to store packets from the input components 410 before the packets are eventually scheduled for delivery to the output components 430. In some implementations, the switching component 420 may enable the input components 410, the output components 430, and/or the controller 440 to communicate with one another.

The output component 430 may store packets and may schedule packets for transmission on output physical links. The output component 430 may support data link layer encapsulation or decapsulation, and/or a variety of higher-level protocols. In some implementations, the output component 430 may transmit packets and/or receive packets. In some implementations, the output component 430 may include an output line card that includes one or more packet processing components (e.g., in the form of integrated circuits), such as one or more IFCs, packet forwarding components, line card controller components, output ports, processors, memories, and/or output queues. In some implementations, the device 400 may include one or more output components 430. In some implementations, the input component 410 and the output component 430 may be implemented by the same set of components (e.g., and input/output component may be a combination of the input component 410 and the output component 430).

The controller 440 includes a processor in the form of, for example, a CPU, a GPU, an APU, a microprocessor, a microcontroller, a DSP, an FPGA, an ASIC, and/or another type of processor. The processor is implemented in hardware, firmware, or a combination of hardware and software. In some implementations, the controller 440 may include one or more processors that can be programmed to perform a function.

In some implementations, the controller 440 may include a RAM, a ROM, and/or another type of dynamic or static storage device (e.g., a flash memory, a magnetic memory, an optical memory, etc.) that stores information and/or instructions for use by the controller 440.

In some implementations, the controller 440 may communicate with other devices, networks, and/or systems connected to the device 400 to exchange information regarding network topology. The controller 440 may create routing tables based on the network topology information, may create forwarding tables based on the routing tables, and may forward the forwarding tables to the input components 410 and/or output components 430. The input components 410 and/or the output components 430 may use the forwarding tables to perform route lookups for incoming and/or outgoing packets.

The controller 440 may perform one or more processes described herein. The controller 440 may perform these processes in response to executing software instructions provided from or carried by a computer-readable medium. A computer-readable medium may include a transient communication medium and/or storage medium. A storage medium (which may be termed a non-transitory computer-readable medium) may include a suitable memory device. A memory device includes memory space within a single physical storage device or memory space spread across multiple physical storage devices. A transient communication medium may occur between components of a single computer system and/or between plural separate computer systems, and may include transmission signals, carrier waves or the like.

Software instructions may be read into a memory and/or storage component associated with the controller 440 from another computer-readable medium or from another device via a communication interface. When executed, software instructions stored in a memory and/or storage component associated with the controller 440 may cause the controller 440 to perform one or more processes described herein. Additionally, or alternatively, hardwired circuitry may be used in place of or in combination with software instructions to perform one or more processes described herein. Thus, implementations described herein are not limited to any specific combination of hardware circuitry and software.

The number and arrangement of components shown in Fig. 4 are provided as an example. In practice, the device 400 may include additional components, fewer components, different components, or differently arranged components than those shown in Fig. 4. Additionally, or alternatively, a set of components (e.g., one or more components) of the device 400 may perform one or more functions described as being performed by another set of components of the device 400.

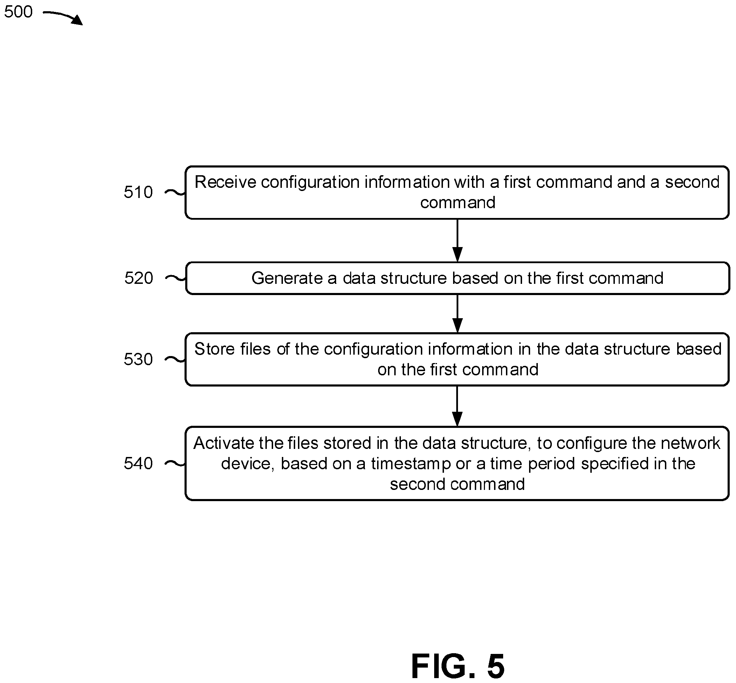

Fig. 5 is a flowchart of an example process 500 for providing time-based synchronized activation of configuration updates in network devices. In some implementations, one or more process blocks of Fig. 5 may be performed by a device (e.g., the network device 220). In some implementations, one or more process blocks of Fig. 5 may be performed by another device or a group of devices separate from or including the device, such as an endpoint device (e.g., the endpoint device 210) and/or a network management system (e.g., the network management system 230). Additionally, or alternatively, one or more process blocks of Fig. 5 may be performed by one or more components of the device 300, such as the processor 320, the memory 330, the input component 340, the output component 350, and/or the communication component 360. Additionally, or alternatively, one or more process blocks of Fig. 5 may be performed by one or more components of the device 400, such as the input component 410, the switching component 420, the output component 430, and/or the controller 440.

As shown in Fig. 5, process 500 may include receiving configuration information with a first command and a second command (block 510). For example, the network device may receive configuration information with a first command and a second command, as described above. In some implementations, the first command and the second command are combined into a single command. In some implementations, the second command includes executable instructions for performing the one or more actions. In some implementations, the first command, the second command, and instructions for performing the one or more actions are combined into a single command. In some implementations, the configuration information includes a configuration application executable by the network device.

As further shown in Fig. 5, process 500 may include generating a data structure based on the first command (block 520). For example, the network device may generate a data structure based on the first command, as described above.

As further shown in Fig. 5, process 500 may include storing files of the configuration information in the data structure based on the first command (block 530). For example, the network device may store files of the configuration information in the data structure based on the first command, as described above.

As further shown in Fig. 5, process 500 may include activating the files stored in the data structure, to configure the network device, based on a timestamp or a time period specified in the second command (block 540). For example, the network device may activate the files stored in the data structure, to configure the network device, based on a timestamp or a time period specified in the second command, as described above. In some implementations, the timestamp includes a date and a time when the files are to be activated. In some implementations, the time period includes a period of time, in minutes, hours, or days, that is to elapse before the files are to be activated.

Process 500 may include additional implementations, such as any single implementation or any combination of implementations described below and/or in connection with one or more other processes described elsewhere herein.

In some implementations, process 500 includes determining whether one or more errors occur based on generating the data structure and storing the files in the data structure, and causing the one or more errors to be corrected when the one or more errors occur.

In some implementations, process 500 includes performing one or more actions, based on the second command, after activating the files stored in the data structure. In some implementations, performing the one or more actions comprises one or more of providing, to a network administrator associated with the network device, an email indicating that the files are activated, providing, to the network administrator, a text message indicating that the files are activated, or providing, to the network administrator, a voice message indicating that the files are activated. In some implementations, the second command includes executable instructions for performing the one or more actions.

In some implementations, process 500 includes determining whether one or more errors are present in the configuration information, and refraining from generating the data structure and storing the files in the data structure when the one or more errors are present in the configuration information. In some implementations, process 500 includes providing, to a network administrator associated with the network device, a message identifying the one or more errors when the one or more errors are present in the configuration information.

Although Fig. 5 shows example blocks of process 500, in some implementations, process 500 may include additional blocks, fewer blocks, different blocks, or differently arranged blocks than those depicted in Fig. 5. Additionally, or alternatively, two or more of the blocks of process 500 may be performed in parallel.

The foregoing disclosure provides illustration and description but is not intended to be exhaustive or to limit the implementations to the precise form disclosed. Modifications may be made in light of the above disclosure or may be acquired from practice of the implementations.

Thus, from one perspective, there has been described that a network device may receive configuration information with a first command and a second command and may generate a data structure based on the first command. The network device may store files of the configuration information in the data structure based on the first command and may activate the files stored in the data structure, to configure the network device, based on a timestamp or a time period specified in the second command.

Further examples of the present teachings are set out in the following numbered clauses:
Clause 1. A method, comprising: receiving, by a network device, configuration information with a first command and a second command; generating, by the network device, a data structure based on the first command; storing, by the network device, files of the configuration information in the data structure based on the first command; and activating, by the network device, the files stored in the data structure, to configure the network device, based on a timestamp or a time period specified in the second command.
Clause 2. The method of clause 1, further comprising: determining whether one or more errors occur based on generating the data structure and storing the files in the data structure; and causing the one or more errors to be corrected when the one or more errors occur.
Clause 3. The method of clause 1 or 2, further comprising: performing one or more actions, based on the second command, after activating the files stored in the data structure.
Clause 4. The method of clause 3, wherein performing the one or more actions comprises one or more of: providing, to a network administrator associated with the network device, an email indicating that the files are activated; providing, to the network administrator, a text message indicating that the files are activated; or providing, to the network administrator, a voice message indicating that the files are activated.
Clause 5. The method of clause 3 or 4, wherein the second command includes executable instructions for performing the one or more actions.
Clause 6. The method of any preceding clause, wherein the timestamp includes a date and a time when the files are to be activated.
Clause 7. The method of any preceding clause, wherein the time period includes a period of time, in minutes, hours, or days, that is to elapse before the files are to be activated.
Clause 8. A network device, comprising: one or more memories; and one or more processors to: receive configuration information with a first command and a second command, the first command is related to a prepare stage of a configuration update of the network device, and the second command is related to an activate stage of the configuration update of the network device; generate a data structure based on the first command; store files for the configuration update in the data structure based on the first command; activate the files stored in the data structure based on a timestamp or a time period specified in the second command; and perform one or more actions, based on the second command, after activating the files stored in the data structure.
Clause 9. The network device of clause 8, wherein the first command and the second command are combined into a single command.
Clause 10. The network device of clause 8 or 9, wherein the second command includes executable instructions for performing the one or more actions.
Clause 11. The network device of clause 8, 9 or 10, wherein the first command, the second command, and instructions for performing the one or more actions are combined into a single command.
Clause 12. The network device of any of clauses 8 to 11, wherein the configuration information includes a configuration application executable by the network device.
Clause 13. The network device of any of clauses 8 to 12, wherein the one or more processors are further to: determine whether one or more errors are present in the configuration information; and refrain from generating the data structure and storing the files in the data structure when the one or more errors are present in the configuration information.
Clause 14. The network device of clause 13, wherein the one or more processors are further to: provide, to a network administrator associated with the network device, a message identifying the one or more errors when the one or more errors are present in the configuration information.
Clause 15. A computer-readable medium carrying a set of instructions, the set of instructions comprising: one or more instructions that, when executed by one or more processors of a network device, cause the network device to: receive an application with a first command and a second command; determine whether one or more errors are present in the application; provide, to a network administrator associated with the network device, a message identifying the one or more errors when the one or more errors are present in the application; store files of the application in a data structure based on the first command and when the one or more errors are not present in the application; and activate the files stored in the data structure based on a timestamp or a time period specified in the second command.
Clause 16. The computer-readable medium of clause 15, wherein the one or more instructions further cause the network device to: perform one or more actions, based on the second command, after activating the files stored in the data structure.
Clause 17. The computer-readable medium of clause 16, wherein the one or more instructions, that cause the network device to perform the one or more actions, cause the network device to one or more of: reboot the network device to enable a configuration update; inform a network management system that the configuration update succeeded or failed; or inform another network device that the network device has performed the configuration update or will go offline to reboot.
Clause 18. The computer-readable medium of clause 15, 16 or 17, wherein the second command includes instructions for performing one or more actions.
Clause 19. The computer-readable medium of any of clauses 15 to 18, wherein the timestamp includes a date and/or a time when the files are to be activated, wherein the time period includes a period of time, in minutes, hours, or days, that is to elapse before the files are to be activated.
Clause 20. The computer-readable medium of any of clauses 15 to 19, wherein the first command and the second command are combined into a single command.

As used herein, the term "component" is intended to be broadly construed as hardware, firmware, or a combination of hardware and software. It will be apparent that systems and/or methods described herein may be implemented in different forms of hardware, firmware, and/or a combination of hardware and software. The actual specialized control hardware or software code used to implement these systems and/or methods is not limiting of the implementations. Thus, the operation and behavior of the systems and/or methods are described herein without reference to specific software code - it being understood that software and hardware can be used to implement the systems and/or methods based on the description herein.

Although particular combinations of features are recited in the claims and/or disclosed in the specification, these combinations are not intended to limit the disclosure of various implementations. In fact, many of these features may be combined in ways not specifically recited in the claims and/or disclosed in the specification. Although each dependent claim listed below may directly depend on only one claim, the disclosure of various implementations includes each dependent claim in combination with every other claim in the claim set.

No element, act, or instruction used herein should be construed as critical or essential unless explicitly described as such. Also, as used herein, the articles "a" and "an" are intended to include one or more items and may be used interchangeably with "one or more." Further, as used herein, the article "the" is intended to include one or more items referenced in connection with the article "the" and may be used interchangeably with "the one or more." Furthermore, as used herein, the term "set" is intended to include one or more items (e.g., related items, unrelated items, a combination of related and unrelated items, and/or the like), and may be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of").

In the preceding specification, various example embodiments have been described with reference to the accompanying drawings. It will, however, be evident that various modifications and changes may be made thereto, and additional embodiments may be implemented, without departing from the broader scope as set forth in the claims that follow. The specification and drawings are accordingly to be regarded in an illustrative rather than restrictive sense.

## Claims

1. A method, comprising:
receiving, by a network device, configuration information with a first command and a second command;
generating, by the network device, a data structure based on the first command;
storing, by the network device, files of the configuration information in the data structure based on the first command; and
activating, by the network device, the files stored in the data structure, to configure the network device, based on a timestamp or a time period specified in the second command.

2. The method of claim 1, further comprising:
determining whether one or more errors occur based on generating the data structure and storing the files in the data structure; and
causing the one or more errors to be corrected when the one or more errors occur.

3. The method of claim 1 or 2, further comprising:
performing one or more actions, based on the second command, after activating the files stored in the data structure, wherein performing the one or more actions may comprise one or more of:
providing, to a network administrator associated with the network device, an email indicating that the files are activated;
providing, to the network administrator, a text message indicating that the files are activated; or
providing, to the network administrator, a voice message indicating that the files are activated.

4. The method of claim 3, wherein the second command includes executable instructions for performing the one or more actions.

5. The method of any preceding claim, wherein the timestamp includes a date and a time when the files are to be activated.

6. The method of any preceding claim, wherein the time period includes a period of time, in minutes, hours, or days, that is to elapse before the files are to be activated.

7. A network device, comprising:
one or more memories; and
one or more processors to:
receive configuration information with a first command and a second command,
the first command is related to a prepare stage of a configuration update of the network device, and
the second command is related to an activate stage of the configuration update of the network device;
generate a data structure based on the first command;
store files for the configuration update in the data structure based on the first command;
activate the files stored in the data structure based on a timestamp or a time period specified in the second command; and
perform one or more actions, based on the second command, after activating the files stored in the data structure.

8. The network device of claim 7, wherein the first command and the second command, and optionally also instructions for performing the one or more actions, are combined into a single command.

9. The network device of claim 7 or 8, wherein the second command includes executable instructions for performing the one or more actions.

10. The network device of any of claims 7 to 9, wherein the configuration information includes a configuration application executable by the network device.

11. The network device of any of claims 7 to 10, wherein the one or more processors are further to:
determine whether one or more errors are present in the configuration information;
refrain from generating the data structure and storing the files in the data structure when the one or more errors are present in the configuration information; and for example
provide, to a network administrator associated with the network device, a message identifying the one or more errors when the one or more errors are present in the configuration information.

12. A computer-readable medium carrying a set of instructions, the set of instructions comprising:
one or more instructions that, when executed by one or more processors of a network device, cause the network device to:
receive an application with a first command and a second command;
determine whether one or more errors are present in the application;
provide, to a network administrator associated with the network device, a message identifying the one or more errors when the one or more errors are present in the application;
store files of the application in a data structure based on the first command and when the one or more errors are not present in the application; and
activate the files stored in the data structure based on a timestamp or a time period specified in the second command.

13. The computer-readable medium of claim 12, wherein the one or more instructions further cause the network device to:
perform one or more actions, based on the second command, after activating the files stored in the data structure;
wherein the one or more instructions, that cause the network device to perform the one or more actions, may cause the network device to one or more of:
reboot the network device to enable a configuration update;
inform a network management system that the configuration update succeeded or failed; or
inform another network device that the network device has performed the configuration update or will go offline to reboot.

14. The computer-readable medium of claim 12 or 13, wherein the second command includes instructions for performing one or more actions.

15. The computer-readable medium of any of claims 12 to 14, wherein the timestamp includes a date and/or a time when the files are to be activated,
wherein the time period includes a period of time, in minutes, hours, or days, that is to elapse before the files are to be activated.
